# EUROPÄISCHE PATENTSCHRIFT

(11) **EP 1 896 706 B1**
(45) Veröffentlichungstag und Bekanntmachung des Hinweises auf die Patenterteilung: **28.07.2010**
(21) Anmeldenummer: 06761659.9
(22) Anmeldetag: 16.06.2006
(51) Int. Cl.: F02B 27/02

(54) **KLAPPENANORDNUNG FÜR EINE FRISCHGASANLAGE**
FLAP ARRANGEMENT FOR A FRESH GAS ARRANGEMENT
SYSTEME DE VOLET POUR INSTALLATION DE GAZ D'AFFINAGE

(30) Priorität: 22.06.2005 DE 102005029193
(43) Veröffentlichungstag der Anmeldung: 12.03.2008
(73) Patentinhaber: Mahle International GmbH, 70376 Stuttgart (DE)
(72) Erfinder: ALBIEZ, Bernd, 79736 Rickenbach (DE)
(74) Vertreter: BRP Renaud & Partner
(86) Internationale Anmeldenummer: PCT/DE2006/001027
(87) Internationale Veröffentlichungsnummer: WO 2006/136137

(56) Entgegenhaltungen:
- WO-A-97/35103
- DE-A1- 10 211 441
- DE-A1- 19 634 913
- JP-A- 2003 083 183
- US-A- 5 211 139
- US-B1- 6 209 503

## Beschreibung

Die vorliegende Erfindung betrifft eine Anordnung einer Klappe in einem Kanal einer Frischgasanlage zur Versorgung einer Brennkraftmaschine, insbesondere eines Kraftfahrzeugs, mit Frischgas. Die Erfindung betrifft außerdem eine mit einer derartigen Klappenanordnung ausgestattete Frischgasanlage.

Aus der DE 196 11 511 A ist eine Klappenanordnung für eine Frischgasanlage gemäß dem Oberbegriff des Anspruches 1 bekannt.

Eine Brennkraftmaschine weist zur Frischgasversorgung eine Frischgasanlage auf, die mehrere Kanäle zur Zuführung des Frischgases zu einzelnen Zylindern der Brennkraftmaschine umfasst. In diesen Kanälen, auch "Saugrohre" genannt, können sogenannte Tumble-Klappen angeordnet sein. Mit Hilfe von Tumble-Klappen kann bedarfsabhängig für den jeweiligen Zylinder eine Ladungsströmung erzeugt werden, die senkrecht zur Zylinderhochachse und parallel zur Kolben-Bolzen-Achse dreht, wodurch sich ein Schichtladebetrieb realisieren lässt. Hierdurch kann die turbulente kinetische Energie im Zylinder erhöht werden, was eine Vergrößerung der rückgeführten Abgasmengen ermöglicht. Größere Rückführraten führen zu einer Entdrosselung der Brennkraftmaschine, was deren Brennstöffverbrauch senkt, sowie zu einer Absenkung der Brennraumtemperatur, was die NO₂-Produktion im Verbrennungsprozess reduziert. Tumble-Klappen kommen vorwiegend bei Otto-Motoren zum Einsatz.

In den Kanälen oder Saugrohren der Frischgasanlage können auch sogenannte Drallklappen zum Einsatz kommen. Mit Hilfe von Drallklappen kann eine Ladungsströmung erzeugt werden, die um die Zylinderhochachse dreht. Mit Hilfe von Drallklappen kann ein Kanal eines einem Zylinder zugeordneten Kanalpaars mehr oder weniger verschlossen werden, um so die turbulente kinetische Energie im Brennraum zu erhöhen. Auf diese Weise lässt sich die Brennkraftmaschine an unterschiedliche Betriebszustände relativ genau anpassen. Neben den oben genannten Vorteilen, die sich in Verbindung mit einer Tumble-Klappe ergeben, lassen sich bei der Verwendung von Drallklappen, insbesondere bei Dieselmotoren, die Partikelemission senken und die Partikelgröße reduzieren.

Grundsätzlich ist es möglich, eine derartige Klappe drehfest an einer Antriebswelle anzuordnen. Durch Drehen der Antriebswelle kann die gewünschte Schwenkverstellung der Klappe realisiert werden, wobei dann zwangsläufig die Antriebswelle koaxial zur Schwenkachse der Klappe verläuft. Je nach Betriebszustand der Brennkraftmaschine und je nach Klappenstellung können an der Klappe relativ große Strömungskräfte angreifen, die von der Antriebswelle aufgenommen werden müssen. Auf diese Weise ist eine Betätigungseinrichtung zum Schwenkverstellen der Klappe relativ großen Belastungen ausgesetzt. Dies kann sich nachteilig für die Lebensdauer der Betätigungseinrichtung auswirken. Ebenso können die an den Klappen angreifenden Strömungskräfte Relativbewegungen der Klappen auslösen, die mit einer unerwünschten Geräuschentwicklung einhergehen können.

Die vorliegende Erfindung beschäftigt sich mit dem Problem, für eine Klappenanordnung der eingangs genannten Art bzw. für eine damit ausgestattete Frischgasanlage eine verbesserte Ausführungsform anzugeben, die sich insbesondere durch eine reduzierte Belastung der jeweiligen Betätigungseinrichtung auszeichnet.

Dieses Problem wird erfindungsgemäß durch die Merkmale der unabhängigen Ansprüche gelöst. Vorteilhafte Ausführungsformen sind Gegenstand der abhängigen Ansprüche.

Die Erfindung beruht auf dem allgemeinen Gedanken, die jeweilige Klappe mit Hilfe eines separaten Stellglieds zum Verschwenken anzutreiben, wobei das jeweilige Stellglied bezüglich der Schwenkachse der Klappe exzentrisch an der Klappe angreift. Durch die exzentrische Krafteinleitung in die Klappe lassen sich günstige Hebelkräfte erzielen, so dass einerseits zum Verstellen der Klappe nur relativ kleine Stellkräfte erforderlich sind. Andererseits werden die an der Klappe angreifenden Strömungskräfte aufgrund der Hebelwirkung entsprechend reduziert auf das Stellglied und somit auf die Betätigungseinrichtung übertragen. Die Belastungen der Betätigungseinrichtung werden dadurch reduziert, wodurch diese bei gleicher Stabilität eine vergrößerte Lebenszeit aufweist oder bei gleicher Lebenszeit mit reduzierter Stabilität und somit preiswerter ausgeführt werden kann.

Die Betätigungseinrichtung ist so ausgestaltet, dass das Stellglied bei seiner Betätigung um eine Drehachse dreht, die zur Schwenkachse parallel und exzentrisch verläuft. Ist dann das Stellglied mit einer Antriebswelle drehfest verbunden, die parallel und exzentrisch zur Schwenkachse verläuft und sich insbesondere koaxial zur Drehachse erstreckt. Hierdurch ist es insbesondere möglich, einen Stellantrieb zum Antreiben der Antriebswelle außerhalb des Kanals anzuordnen. Insbesondere kann dadurch auch ein gemeinsamer Stellantrieb für mehrere Stellglieder vorgesehen sein, der zweckmäßig über eine gemeinsame Antriebswelle die Stellglieder synchron antreibt.

Die Klappe kann beispielsweise mittels Lagerzapfen, die sich koaxial zur Schwenkachse erstrecken, in Schwenklagern gelagert sein. Ebenso kann die Klappe an einer Lagerwelleangeordnet sein, die sich koaxial zur Schwenkachse erstreckt. Insbesondere können an einer derartigen Lagerwelle gleichzeitig mehrere Klappen benachbarter Klappenanordnungen angeordnet sein. Diese gemeinsame Lagerwelle und die zweckmäßig vorhandene gemeinsame Antriebswelle erstrecken sich dann parallel und exzentrisch, also voneinander beabstandet, um die vorgenannten günstigen Hebelverhältnisse zu realisieren. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, perspektivische Explosi- onsdarstellung einer Frischgasanlage bei einer ersten Ausführungsform,
- Fig. 2: einen Längsschnitt durch eine Klappenanordnung der Frischgasanlage aus Fig. 1,
- Fig. 3: eine Ansicht wie in Fig. 2, jedoch bei einer ande- ren Klappenstellung,
- Fig. 4: eine Ansicht wie in Fig. 1, jedoch bei einer zwei- ten Ausführungsform,
- Fig. 5: einen Längsschnitt durch eine Klappenanordnung der Frischgasanlage aus Fig. 4,
- Fig. 6: eine Ansicht wie in Fig. 5, jedoch bei einer ande- ren Klappenstellung.

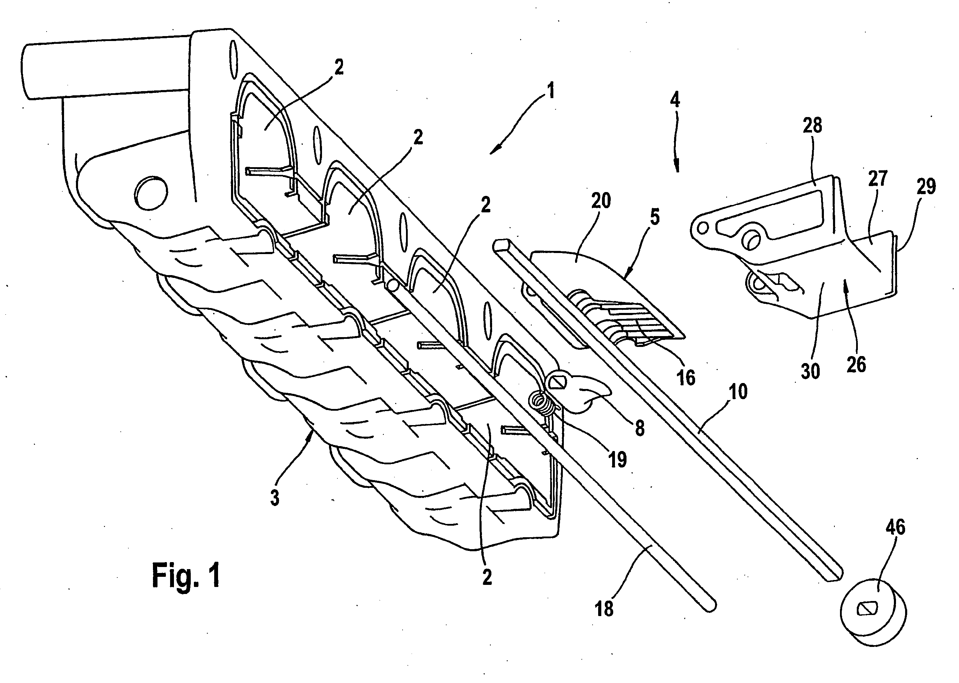

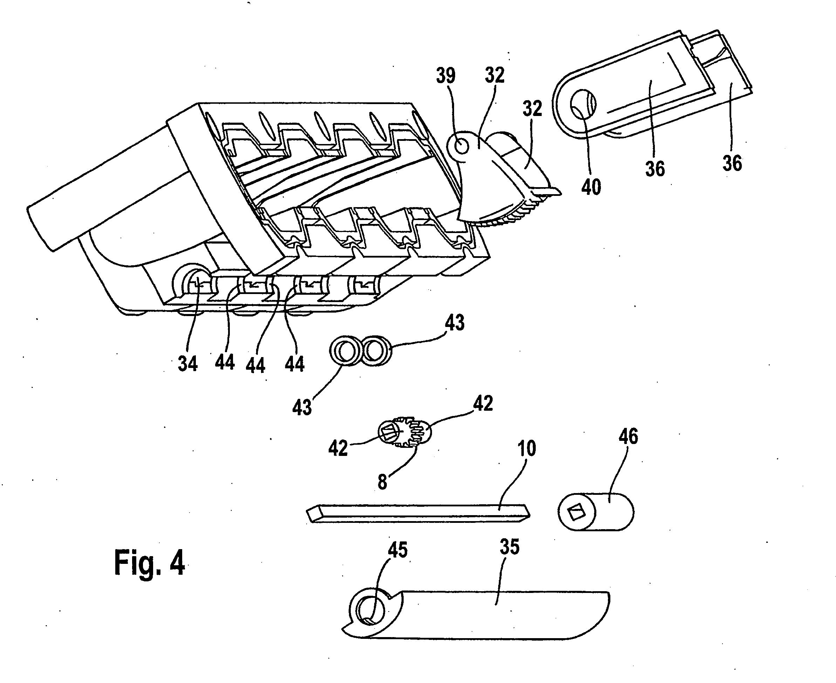

Entsprechend den Fig. 1 und 4 umfasst eine erfindungsgemäße Frischgasanlage 1 mehrere Kanäle 2, die hier in einem Kanalblock 3 zusammengefasst sind. Die Frischgasanlage 1 dient zur Versorgung einer nicht gezeigten Brennkraftmaschine, vorzugsweise eines Kraftfahrzeugs, mit Frischgas. Die einzelnen Kanäle 2 dienen zur Zuführung des Frischgases zu einzelnen Zylindern der Brennkraftmaschine. Der Kanalblock 3 ist beispielsweise zur Montage an einem Motorblock der Brennkraftmaschine vorgesehen.

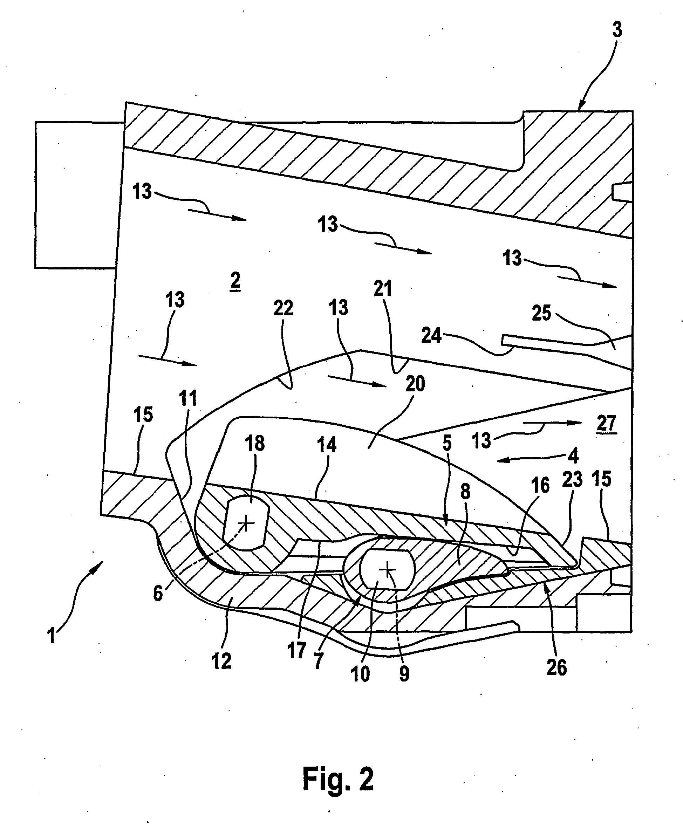

Zumindest einer der Kanäle 2 ist mit einer erfindungsgemäßen Klappenanordnung 4 ausgestattet, die mit Bezug auf die Fig. 2 und 3 sowie 5 und 6 näher erläutert wird. Vorzugsweise sind mehrere, in der Regel sämtliche Kanäle 2 jeweils mit einer derartigen Klappenanordnung 4 ausgestattet. In Fig. 1 bzw. in Fig. 4 ist jeweils nur eine solche Klappenanordnung 4 exemplarisch wiedergegeben, wobei einzelne Bestandteile der Klappenanordnung 4 bereits für den Einsatz in der mit mehreren Klappenanordnungen ausgestatteten Frischgasanlage 1 adaptiert sind, was ebenfalls weiter unten mit Bezug auf die Fig. 1 und 4 näher erläutert wird.

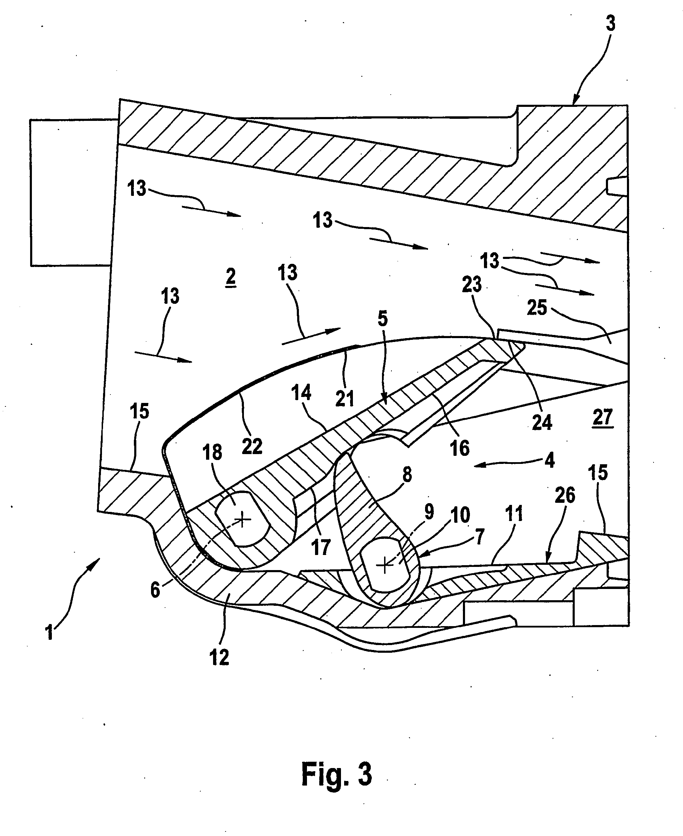

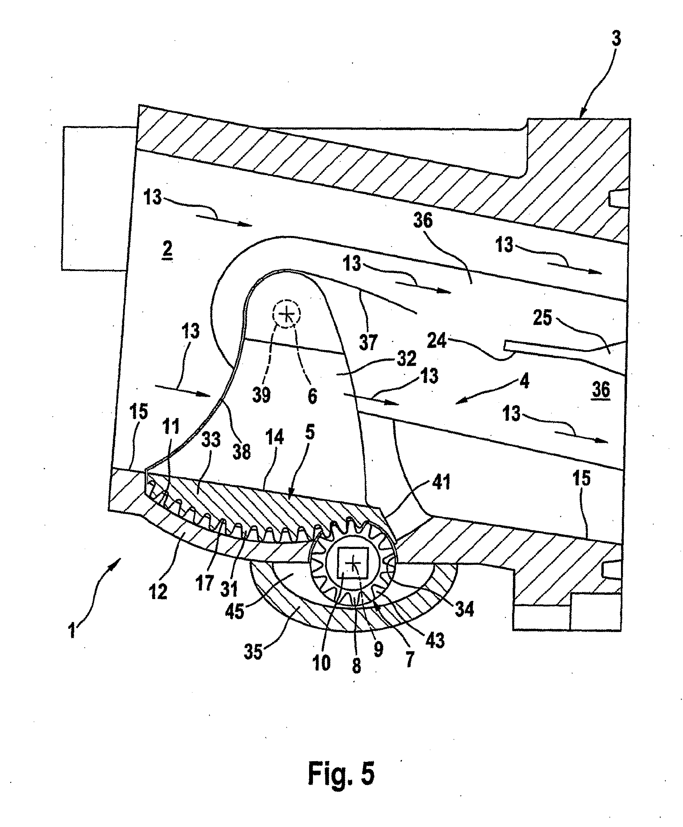

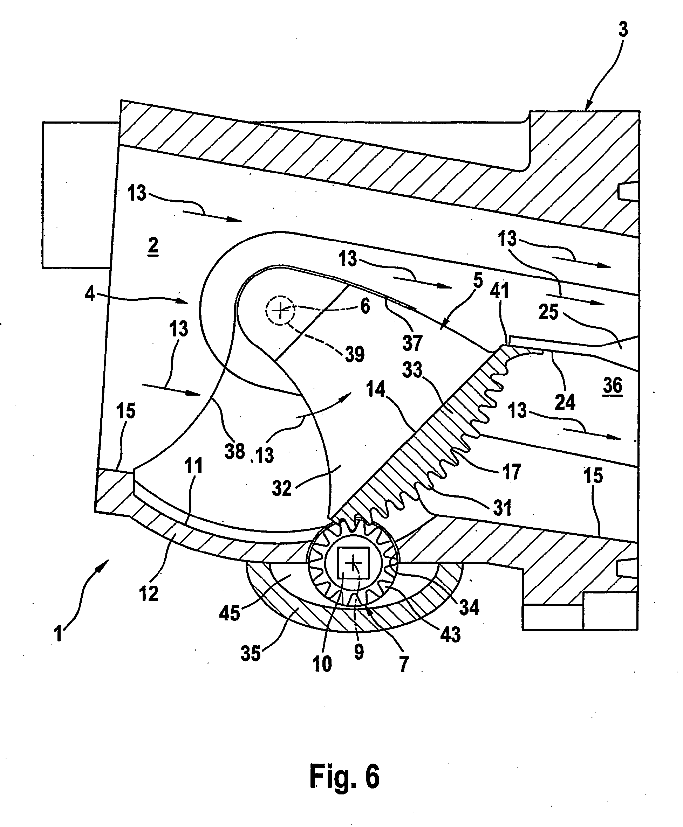

Entsprechend den Fig. 2 und 3 sowie 5 und 6 umfasst die jeweilige Klappenanordnung 4 eine Klappe 5, die im Kanal 2 angeordnet ist und dabei um eine Schwenkachse 6 zwischen einer in den Fig. 2 und 5 gezeigten Ausgangsstellung und einer in den Fig. 3 und 6 gezeigten Endstellung verschwenkbar ist. Um die Klappe 5 zum Verschwenken um ihre Schwenkachse 6 betätigen zu können, ist eine Betätigungseinrichtung 7 vorgesehen, die ein Stellglied 8 aufweist. Dieses Stellglied 8 wirkt zur Schwenkverstellung der Klappe 5 mit dieser zusammen. Hierzu greift das Stellglied 8 exzentrisch zur Schwenkachse 6 an der Klappe 5 an. Das heißt, die Kraftübertragung zwischen Stellglied 8 und Klappe 5 erfolgt an einer zur Schwenkachse 6 beabstandeten Stelle, wodurch sich die am Stellglied 8 herrschenden Stellkräfte aus den Hebelgesetzen ergeben.

Bei den hier gezeigten Ausführungsformen ist das Stellglied 8 jeweils um eine Drehachse 9 drehverstellbar gelagert. Um diese Drehachse 9 dreht das Stellglied 8 beim Schwenkbetätigen der Klappe 5. Diese Drehachse 9 erstreckt sich parallel zur Schwenkachse 6, ist jedoch bezüglich der Schwenkachse 6 exzentrisch, also beabstandet angeordnet. Vorzugsweise ist eine Antriebswelle 10 vorgesehen, mit welcher das Stellglied 8 drehfest verbunden ist. Diese Antriebswelle 10 erstreckt sich hier koaxial zur Drehachse 9 und verläuft somit parallel sowie exzentrisch zur Schwenkachse 6. Die drehfeste Kopplung zwischen Stellglied 8 und Antriebswelle 10 erfolgt hier mittels Formschluss.

Des Weiteren kann zur Unterbringung der Klappe 5 in der Ausgangsstellung eine Mulde 11 vorgesehen sein. Diese Mulde 11 ist in einer Kanalwand 12 ausgebildet, die den Kanal 2 begrenzt. In dieser Mulde 11 ist die Klappe 5 in der Ausgangsstellung versenkt angeordnet. Dabei ist eine dem Kanal 2 bzw. einer sich im Betrieb der Brennkraftmaschine ausbildenden, hier durch Pfeile angedeuteten Frischgasströmung 13 ausgesetzte Vorderseite 14 der Klappe 5 in einer der Frischgasströmung 13 ausgesetzte Innenkontur 15 der Kanalwand 12 formintegriert angeordnet. Zweckmäßig ist auch das Stellglied 8 in dieser Mulde 11 und somit in der Kanalwand 12 versenkt angeordnet. Dadurch sind auch die Drehachse 9 und die Antriebswelle 10 in der Kanalwand 12 versenkt angeordnet.

Die in der Mulde 11 versenkte Klappe 5 liegt quasi außerhalb der Frischgasströmung 13 und hat auf diese im wesentlichen keinen störenden Einfluss.

Entsprechend den Fig. 2 und 3 ist bei der Klappenanordnung 4, die bei der in Fig. 1 gezeigten Frischgasanlage 1 verbaut ist, das Stellglied 8 als Nocken ausgestaltet, der im folgenden ebenfalls mit 8 bezeichnet wird. Der Nocken 8 ist drehfest mit der Antriebswelle 10 verbunden und wirkt mit einer Nockenkulisse 16 zusammen, die an der Klappe 5 ausgebildet ist. Zweckmäßig ist diese Nockenkulisse 16 an einer Rückseite 17 der Klappe 5 ausgebildet, die von der Frischgasströmung 13 abgewandt ist. Der Nocken 8 ist in der Ausgangsstellung gemäß Fig. 2 so orientiert, dass er von der Drehachse 9 an der von der Schwenkachse 6 abgewandten Seite absteht. Hierdurch und insbesondere durch eine spezielle Kontur am Nocken 8 und/oder an der Nockenkulisse 16 lässt sich für die Betätigung der Klappe 5 eine Kinematik realisieren, die einen optimierten Kompromiss zwischen möglichst kleinen Stellkräften einerseits und einer möglichst schnellen Verstellbarkeit andererseits darstellt. Gleichzeitig ermöglicht diese Kinematik eine besonders günstige Anpassung an die im Betrieb an der Klappe 5 angreifenden Strömungskräfte, die zunehmen, je weiter die Klappe 5 aus ihrer Ausgangsstellung herausgeschwenkt ist.

Bei der hier gezeigten Ausführungsform ist die Klappe 5 an einer Lagerwelle 18 angeordnet. Die Lagerwelle 18 erstreckt sich dabei koaxial zur Schwenkachse 6. Im hier gezeigten Ausführungsbeispiel ist die Klappe 5 an der Lagerwelle 18 drehfest angeordnet, was beispielsweise durch eine entsprechende Formschlusskupplung erreicht wird. Dementsprechend ist bei dieser Ausführungsform die Lagerwelle auf geeignete Weise um die Schwenkachse 6 drehbar gelagert, vorzugsweise am Kanalblock 3. Hierdurch ist es insbesondere möglich, außerhalb des Kanals 2 eine Rückstellfeder anzuordnen, die an der Lagerwelle 18 angreift und die Klappe 5 in deren Ausgangsstellung vorspannt. Eine derartige Rückstellfeder ist in Fig. 1 dargestellt und mit 19 bezeichnet.

Alternativ ist auch eine Ausführungsform möglich, bei der die Klappe 5 an der Lagerwelle 18 um die Schwenkachse 6 schwenkbar gelagert ist. Die Lagerwelle 18 selbst kann dann drehfest angeordnet sein. Eine entsprechende Rückstellfeder greift dann direkt an der Klappe 5 an, wozu sie innerhalb des Kanals 2 anzuordnen ist.

Die Schwenkachse 6 ist hier ebenso wie die Lagerwelle 18 in der Mulde 11, also in der Kanalwand 12 versenkt angeordnet.

Die Klappe 5 ist hier an ihren bezüglich der Schwenkachse 6 axialen Enden mit Seitenwangen 20 ausgestattet, die sich jeweils in einer Wandnische 21 des Kanals 2 parallel zur Kanalwand erstrecken. Diese Wandnische 21 kann dabei so geformt sein, dass sie in der in Fig. 3 gezeigten Endstellung der Klappe 5 einen Endanschlag 22 bildet, an dem die Klappe 5 an der jeweiligen Seitenwange 20 zur Anlage kommt. Die Betätigungseinrichtung 7 ist zweckmäßig so ausgestaltet, dass sie die Klappe 5 mit dem Stellglied 8 gegen besagten Endanschlag 22 andrücken kann, wodurch in der Endstellung eine sichere Positionierung für die Klappe 5 erreicht wird. Gleichzeitig kann auch ein bezüglich der Schwenkachse 6 radiales Klappenende 23 in der Endstellung an einer komplementären Widerlagerfläche 24 zur Anlage kommen, um die Endstellung der Klappe 5 zu definieren. Besagte Widerlagerfläche 24 kann beispielsweise an einer Trennwand 25 ausgebildet sein, die den Kanal 2 im Bereich der Klappe 5 in zwei nicht näher bezeichnete Teilkanäle unterteilt, von denen der eine mit Hilfe der Klappe 5 gesteuert, insbesondere gesperrt werden kann.

Entsprechend Fig. 1 kann die jeweilige Klappenanordnung 4 eine Klappeneinheit 26 umfassen, die in den jeweiligen Kanal 2 eingesetzt ist und dort einen den Kanal 2 begrenzenden Wandabschnitt 27 bildet. Die Klappeneinheit 26 umfasst hier zwei Wangen 28, 29, die über einen Bodenabschnitt 30 miteinander verbunden sind. Im eingebauten Zustand sind in der Klappeneinheit 26 sowohl die Klappe 5 als auch das Stellglied 8 angeordnet. Des Weiteren erstrecken sich die Schwenkachse 6 und/oder die Drehachse 9 und/oder die Lagerwelle 18 und/oder die Antriebswelle 10 durch die Klappeneinheit 26. Mit Hilfe einer derartigen Klappeneinheit 26 vereinfacht sich die Herstellung der Frischgasanlage 1.

Entsprechend den Fig. 5 und 6 kann bei einer anderen Klappenanordnung 4, die bei der in Fig. 4 gezeigten Frischgasanlage 1 verbaut ist, das Stellglied 8 als Zahnrad ausgestaltet sein, das im folgenden ebenfalls mit 8 bezeichnet wird. Dieses Zahnrad 8 ist drehfest mit der Antriebswelle 10 verbunden, zweckmäßig durch einen geeigneten Formschluss. An der Klappe 5 ist ein Zahnradsegment 31 ausgebildet. Zum Verschwenken der Klappe 5 wirkt das Zahnrad 8 mit dem Zahnradsegment 31 zusammen, das heißt, das Zahnrad 8 kämmt das Zahnradsegment 31. Vorzugsweise ist auch hier das Zahnradsegment 31 an der Rückseite 17 der Klappe 5 ausgebildet. Das Zahnradsegment 31 erstreckt sich konzentrisch zur Schwenkachse 6. Bei der hier gezeigten Ausführungsform erstreckt sich die Schwenkachse 6 in einen mittleren Bereich durch den Kanal 2, insbesondere in einer Ebene, in der sich auch die Trennwand 25 erstreckt. Auch hier weist die Klappe 5 zwei Seitenwangen 32 auf, die über einen gemeinsamen Klappenkörper 33 miteinander verbunden sind und sich von diesem bis zur Schwenkachse 6 erstrecken. Am Klappenkörper 33 ist das Zahnradsegment 31 ausgebildet. Des Weiteren übernimmt der Klappenkörper 33 die Steuerfunktion der Klappe 5.

Vorzugsweise ist auch hier die Klappe 5 in der Ausgangsstellung in der Kanalwand 12 versenkt angeordnet, wozu diese wieder mit einer Mulde 11 ausgestattet sein kann. Auch ist die Vorderseite 14 der Klappe 5 bezüglich der Innenkontur 15 der Kanalwand 12 für die Ausgangsstellung formintegriert ausgestaltet.

Das Zahnrad 8 ist ebenfalls in der Kanalwand 12 versenkt angeordnet. Bei der hier gezeigten, besonderen Ausführungsform weist die Kanalwand 12 im Bereich des Zahnrads 8 eine Öffnung 34 auf, durch welche das Zahnrad 8 von außen durch die Kanalwand 12 bis zum Zahnradsegment 31 in den Kanal 2 bzw. in die Mulde 11 hineinragt. An einer vom Kanal 2 abgewandten Seite ist besagte Öffnung 34 mittels einer Abdeckung 35 verschlossen, welche das Zahnrad 8 und die Antriebswelle 10 umhüllt. Durch eine entsprechende Konturierung oder Nischenbildung an zu den Seitenwangen 32 der Klappe 5 benachbarten Kanalwänden bzw. in den Kanal 2 einsetzbaren Wangen 36 kann für die Klappe 5 ein Endanschlag 37 für die in Fig. 6 gezeigte Endstellung und/oder ein weiterer Endanschlag 38 für die in Fig. 5 gezeigte Ausgangsstellung realisiert werden.

Bei der hier gezeigten Ausführungsform ist die Klappe 5 mit zwei Lagerzapfen 39 ausgestattet, die sich koaxial zur Schwenkachse 6 erstrecken. Die Lagerzapfen 39 sind an den Seitenwangen 32 ausgebildet und sind dabei jeweils in einem Schwenklager 40 um die Schwenkachse 6 drehbar gelagert. Diese Schwenklager 40 sind vorzugsweise in den Wangen 36 ausgebildet, die in den Kanal 2 bzw. in den Kanalblock 3 eingesetzt sind. Diese Wangen 36 bilden dabei wieder Wandabschnitte des Kanals 2.

Zur Definition der in Fig. 6 gezeigten Endstellung kann eine abströmseitige Endkante 41 an die Widerlagerfläche 24 adaptiert sein und bei Erreichen der Endstellung an dieser zur Anlage kommen. Über das Zahnrad 8 kann die Klappe 5 in der Endstellung gegen den Endanschlag 37 und gegen die Widerlagerfläche 24 angepresst werden, um die Endstellung zu stabilisieren. Bei dieser Ausführungsform kann das Zahnrad 8 außerdem die Ausgangsstellung stabilisieren, in dem das Zahnrad 8 die Klappe 5 gegen den weiteren, der Ausgangsstellung zugeordneten Endanschlag 38 anpresst.

Fig. 4 zeigt eine weitere Besonderheit dieser Klappenanordnung 4. Das Zahnrad 8 ist an seinen beiden Axialenden jeweils mit einem Zylinder 42 axial verlängert. Vorzugsweise bilden die beiden Zylinder 42 und das Zahnrad 8 ein einstückighergestelltes Bauteil. Die beiden Zylinder 42 sind zweckmäßig drehfest an der Antriebswelle 10 angeordnet, insbesondere formschlüssig auf diese aufgesteckt. Im montierten Zustand sind die Zylinder 42 in Lagerhülsen 43 um die Drehachse 9 drehbar gelagert. Auf diese Weise ist auch die Antriebswelle 10 über die Zylinder 42 in den Lagerhülsen 43 um die Drehachse 9 drehbar gelagert.

Die Lagerhülsen 43 sind hierzu in erste Lagerhalbschalen 44 eingesetzt, die am Kanalblock 3 ausgebildet sind. Zweite Lagerhalbschalen 45 sind an der Abdeckung 35 ausgebildet und komplettieren die Lagerung bzw. Halterung der Lagerhülsen 43.

Entsprechend Fig. 1 kann bei einer Ausführungsform der Frischgasanlage 1, bei der zumindest zwei, regelmäßig alle Kanäle 2 jeweils mit einer solchen Klappenanordnung 4 ausgestattet sind, einen gemeinsamen Stellantrieb 46 aufweisen, der sämtlichen Betätigungseinrichtungen 7 aller Klappenanordnungen 4 zugeordnet ist. Zweckmäßig ist dann auch eine gemeinsame Antriebswelle 10 vorgesehen, die mit den Stellgliedern 8 der zugehörigen Betätigungseinrichtungen 4 drehfest verbunden ist. Auf diese Weise können sämtliche Klappen 5 mit Hilfe des gemeinsamen Stellantriebs 46 besonders einfach synchron betätigt werden.

Vorzugsweise ist zur Lagerung der Klappen 5 eine gemeinsame Lagerwelle 18 vorgesehen, an der die Klappen 5 der zugehörigen Betätigungseinrichtungen 4 gemeinsam angeordnet sind. Die gemeinsame Antriebswelle 10 und/oder die gemeinsame Lagerwelle 18 eigenen sich beim Zusammenbau der Frischgasanlage 1 außerdem dazu, die in den Kanalblock 3 eingesetzten Komponenten der Klappenanordnungen 4 am Kanalblock 3 formschlüssig zu sichern.

Entsprechend Fig. 4 wird auch bei dieser Ausführungsform eine Variante bevorzugt, bei der eine gemeinsame Antriebswelle 10 vorgesehen ist, an der die Stellglieder 8 aller beteiligten Lageranordnungen 4 drehfest angeordnet sind und die mit einem gemeinsamen Stellantrieb 46 antreibbar ist. Des Weiteren ist bei dieser Ausführungsform eine gemeinsame Abdeckung 35 vorgesehen, um die gemeinsame Antriebswelle 10, die Stellglieder 8 und die Lageranordnungen 42, 43, 44, 45 abzudecken und die Öffnungen 34 zu verschließen.

Die hier gezeigten Klappen 5 sind exemplarisch als Tumble-Klappen ausgebildet, mit deren Hilfe insbesondere ein Schichtladebetrieb für die Brennkraftmaschine realisierbar ist. Ebenso kann es sich bei den Klappen 5 um Drallklappen oder um beliebige andere Klappen 5, z. B. Drosselklappen, handeln, die zylinderspezifisch in den Kanälen 2 der Frischgasanlage 1 angeordnet sind.

## Patentansprüche

1. Anordnung einer Klappe (5) in einem Kanal (2) einer Frischgasanlage (1) zur Versorgung einer Brennkraftmaschine, insbesondere eines Kraftfahrzeugs, mit Frischgas,
- mit einer Betätigungseinrichtung (7) zum Verschwenken der Klappe (5) um eine Schwenkachse (6),
- wobei die Betätigungeinrichtung (7) ein Stellglied (8) aufweist, das bei seiner Betätigung zum Verschwenken der Klappe (5) an dieser exzentrisch zur Schwenkachse (6) angreift,
- wobei das Stellglied (8) bei seiner Betätigung um eine Drehachse (9) dreht, die zur Schwenkachse (6) parallel und exzentrisch verläuft, und mit einer Antriebswelle (10) drehfest verbunden ist, die parallel und exzentrisch zur Schwenkachse (6) verläuft,
**dadurch gekennzeichnet**,
das die Drehachse (9) und die Antriebswelle (10) in einer den Kanal (2) begrenzenden Kanalwand (12) versenkt angeordnet sind.

2. Klappenanordnung nach Anspruch 1,
**gekennzeichnet durch** wenigstens eines der folgenden Merkmale:
- das Stellglied (8) ist als Zahnrad ausgestaltet, das drehfest mit einer Antriebswelle (10) verbunden ist, und die zum Verschwenken der Klappe (5) mit einem an dieser ausgebildeten Zahnradsegment (31) zusammenwirkt;
- das Zahnradsegment (31) erstreckt sich konzentrisch zur Schwenkachse (6);
- das Zahnradsegment (31) ist an einer von der Frischgasströmung (13) abgewandten Rückseite (17) der Klappe (5) ausgebildet;
- das Zahnrad ist in einer den Kanal (2) begrenzenden Kanalwand (12) versenkt angeordnet;
- das Zahnrad ist an beiden axialen Enden jeweils mit einem Zylinder (42) verlängert, wobei jeder Zylinder (42) in einer Lagerhülse (43) um die Drehachse (9) drehbar gelagert ist.

3. Klappenanordnung nach Anspruch 1,
**gekennzeichnet durch** wenigstens eines der folgenden Merkmale:
- das Stellglied (8) ist als Nocken ausgestaltet, der drehfest mit einer Antriebswelle (10) verbunden ist und der zum Verschwenken der Klappe (5) mit einer an dieser ausgebildeten Nockenkulisse (16) zusammenwirkt;
- die Nockenkulisse (16) ist an einer von der Frischgasströmung (13) abgewandten Rückseite (17) der Klappe (5) ausgebildet;
- die Schwenkachse (6) ist in einer den Kanal (2) begrenzenden Kanalwand (12) versenkt angeordnet.

4. Klappenanordnung nach einem der Ansprüche 1 bis 3, **gekennzeichnet durch** wenigstens eines der folgenden Merkmale:
- die Klappe (5) ist an einer Lagerwelle (18) angeordnet, die sich koaxial zur Schwenkachse (6) erstreckt;
- die Klappe (5) ist an der Lagerwelle (18) um die Schwenkachse (6) verschwenkbar gelagert;
- die Klappe (5) ist an der Lagerwelle (18) drehfest angeordnet und die Lagerwelle (18) ist um die Schwenkachse (6) drehbar gelagert;
- die Klappe (5) ist mittels einer Rückstellfeder (19) in eine Ausgangsstellung vorgespannt;
- die Rückstellfeder (19) greift an der Klappe (5) oder an der mit der Klappe (5) drehfest verbundenen Lagerwelle (18) an.

5. Klappenanordnung nach einem der Ansprüche 1 bis 4, **gekennzeichnet durch** wenigstens eines der folgenden Merkmale:
- die Klappe (5) weist zwei Lagerzapfen (39) auf, die jeweils in einem Schwenklager (40) um die Schwenkachse (6) drehbar gelagert sind;
- die beiden Schwenklager (40) sind jeweils in einer Wange (36) ausgebildet, die in den Kanal (2) als den Kanal (2) begrenzende Wandabschnitte eingesetzt sind;
- in den Kanal (2) ist eine Klappeneinheit (36) eingesetzt, die einen den Kanal (2) begrenzenden Wandabschnitt (27) bildet, in dem die Klappe (5) und das Stellglied (8) angeordnet sind, und **durch** den sich die Schwenkachse (6) und/oder die Drehachse (9) und/oder die Lagerwelle (18) und/oder die Antriebswelle (10) hindurcherstreckt;
- die Klappe (5) ist zumindest in einer Endstellung mit dem Stellglied (8) gegen einen Endanschlag (22; 37; 38) angedrückt.

6. Frischgasanlage zur Versorgung einer Brennkraftmaschine, insbesondere eines Kraftfahrzeugs, mit Frischgas,
- mit mehreren Kanälen zur Zuführung des Frischgases zu einzelnen Zylindern der Brennkraftmaschine,
- wobei zumindest einer der Kanäle (2) mit einer Klappenanordnung (4) nach wenigstens einem der Ansprüche 1 bis 5 ausgestattet ist.

7. Frischgasanlage nach Anspruch 6, bei der zumindest zwei oder sämtliche Kanäle (2) jeweils mit einer solchen Klappenanordnung (4) ausgestattet sind,
**gekennzeichnet durch** wenigstens eines der folgenden Merkmale:
- zumindest zwei oder sämtliche Betätigungseinrichtungen (7) weisen zum Betätigen ihrer Stellglieder (8) einen gemeinsamen Stellantrieb (46) auf;
- bei zumindest zwei oder bei sämtlichen Betätigungseinrichtungen (7) sind die Stellglieder (8) an einer gemeinsamen Antriebswelle (10) drehfest angeordnet;
- der gemeinsame Stellantrieb (46) ist mit der gemeinsamen Antriebswelle (10) antriebsgekoppelt;
- bei zumindest zwei oder sämtlichen Betätigungseinrichtungen (7) sind die Klappen (5) an einer gemeinsamen Lagerwelle (18) angeordnet;
- alle an der gemeinsamen Lagerwelle (18) drehfest angeordneten Klappen (5) sind mittels einer an der gemeinsamen Lagerwelle (18) angreifenden gemeinsamen Rückstellfeder (19) in eine Ausgangsstellung vorgespannt;
- die Klappen (5) dienen als Tumble-Klappen oder als Drallklappen.

## Claims

1. An arrangement of a valve (5) in a channel (2) of a fresh gas system (1) for supplying fresh gas to an internal combustion engine, in particular in a motor vehicle,
- with an actuating device (7) for pivoting the valve (5) about a pivot axis (6),
- whereby the actuating device (7) has an actuator (8) which acts on the valve eccentrically with respect to the pivot axis (6) to pivot the valve (5) in its actuation,
- whereby the actuator (8), when actuated, rotates about an axis of rotation (9) that runs parallel and eccentrically to the pivot axis (6) and is connected in a rotationally fixed manner to a drive shaft (10), which runs parallel and eccentrically to the pivot axis (6), **characterized in that**
the axis of rotation (9) and the drive shaft (10) are arranged countersunk in a channel wall (12) bordering the channel (2).

2. The valve arrangement according to Claim 1, **characterized by** at least one of the following features:
- the actuator (8) is designed as a gearwheel connected to a drive shaft (10) in a rotationally fixed manner and cooperating with a gearwheel segment (31) designed thereon to pivot the valve (5) ;
- the gearwheel segment (31) extends concentrically with the pivot axis (6);
- the gearwheel segment (31) is designed on a back side (17) of the valve (5) facing away from the fresh gas flow (13);
- the gearwheel is arranged so it is countersunk in a channel wall (12) bordering the channel (2);
- the gearwheel is lengthened with a cylinder (42) on each of the two axial ends, each cylinder (42) being mounted to rotate about the axis of rotation (9) in a bearing sleeve (43).

3. The valve arrangement according to Claim 1, **characterized by** at least one of the following features:
- the actuator (8) is designed as a cam which is connected to a drive shaft (10) in a rotationally fixed manner and which cooperates with a cam slider (16) formed thereon for pivoting the valve (5) ;
- the cam slider (16) is designed on a back side (17) of the valve (5) facing away from the fresh gas flow (13);
- the pivot axis (6) is arranged countersunk in a channel wall (12) bordering the channel (2).

4. The valve arrangement according to any one of Claims 1 through 3,
**characterized by** at least one of the following features:
- the valve (5) is arranged on a bearing shaft (18) extending coaxially with the pivot axis (6);
- the valve (5) is mounted on the bearing shaft (18) so it can pivot about the pivot axis (6);
- the valve (5) is arranged on the bearing shaft (18) in a rotationally fixed manner and the bearing shaft (18) is mounted to rotate about the pivot axis (6);
- the valve (5) is prestressed into a starting position by means of a restoring spring (19);
- the restoring spring (19) acts on the valve (5) or on the bearing shaft (18) connected to the valve (5) in a rotationally fixed manner.

5. The valve arrangement according to any one of Claims 1 through 4,
**characterized by** at least one of the following features:
- the valve (5) has two bearing journals (39), each being mounted in a pivot bearing (40) to rotate about the pivot axis (6);
- the two pivot bearings (40) are each designed in a wall (36) inserted into the channel (2) as a wall section bordering the channel (2);
- a valve unit (36) forming a wall section (27) bordering the channel (2) is inserted into the channel (2), the valve (5) and the actuator (8) being arranged in this wall section, and the pivot axis (6) and/or the axis of rotation (9) and/or the bearing shaft (18) and/or the drive shaft (10) passing through the channel;
- the valve (5) is pressed together with the actuator (8) against an end stop (22; 37; 38) in at least one end position.

6. The fresh gas system for supplying fresh gas to an internal combustion engine, in particular in a motor vehicle,
- having a plurality of channels for supplying fresh gas to individual cylinders of the internal combustion engine;
- at least one of the channels (2) being equipped with a valve arrangement (4) according to at least one of Claims 1 through 5.

7. The fresh gas system according to Claim 6, in which at least two or all channels (2) are equipped with such a valve arrangement (4),
**characterized by** at least one of the following features:
- at least two or all of the actuating devices (7) have a common actuating drive (46) for actuating their actuators (8);
- on at least two or all of the actuating devices (7) the actuators (8) are arranged on a common drive shaft (10) in a rotationally fixed manner;
- the joint actuating drive (46) is drive-coupled to the joint drive shaft (10);
in at least two or all of the actuating devices (7) the valves (5) are arranged on a joint bearing shaft (18);
- all valves (5) arranged on the joint bearing shaft (18) in a rotationally fixed manner are prestressed into a starting position by means of a joint restoring spring (19) acting on the joint bearing shaft (18);
- the valves (5) serve as tumble valves or as swirl valves.

## Revendications

1. Agencement d'un volet (5) dans un canal (2) d'une installation de gaz d'affinage (1) pour alimenter un moteur à combustion interne, notamment d'un véhicule automobile, avec du gaz d'affinage,
- comportant un dispositif d'actionnement (7) pour basculer le volet (5) autour d'un axe de basculement (6),
- dans lequel le dispositif d'actionnement (7) présente un organe de réglage (8), qui vient en prise lors de son actionnement afin de basculer le clapet (5) sur ce dernier de manière excentrée par rapport à l'axe de basculement (6),
- dans lequel l'organe de réglage (8) lors de son actionnement tourne autour d'un axe de rotation (9), qui s'étend de manière excentrée et parallèlement à l'axe de basculement (6) et est relié de manière solidaire en rotation à un arbre d'entraînement (10), qui s'étend de manière excentrée et parallèlement à l'axe de basculement (6),
**caractérisé en ce que**
l'axe de rotation (9) et l'arbre d'entraînement (10) s'enfoncent dans une paroi de canal (12) délimitant le canal (2).

2. Agencement de volet selon la revendication 1,
**caractérisé par** au moins une des caractéristiques suivantes :
- l'organe de réglage (8) est configuré comme une roue dentée, qui est reliée de manière solidaire en rotation à un arbre d'entraînement (10), et qui coopère afin de basculer le volet (5) avec un segment de roue dentée réalisé sur celui-ci (31) ;
- le segment de roue dentée (31) s'étend concentriquement par rapport à l'axe de basculement (6) ;
- le segment de roue dentée (31) est réalisé sur une face arrière (17) du volet (5) qui se détourne du courant de gaz d'affinage (13) ;
- la roue dentée est enfoncée dans une paroi de canal (12) délimitant le canal (2) ;
- la roue dentée est allongée aux deux extrémités axiales par respectivement un cylindre (42), dans lequel chaque cylindre (42) est positionné de manière rotative dans un manchon de positionnement (43) autour de l'axe de rotation (9).

3. Agencement de volet selon la revendication 1,
**caractérisé par** au moins une des caractéristiques suivantes :
- l'organe de réglage (8) est configuré comme une came, qui est reliée de manière solidaire en rotation à un arbre d'entraînement (10) et qui coopère afin de basculer le volet (5) avec une coulisse de came (16) réalisée sur celui-ci ;
- la coulisse de came (16) est réalisée sur une face arrière (17) du volet (5) qui se détourne du courant de gaz d'affinage (13) ;
- l'axe de basculement (6) s'enfonce dans une paroi de canal (12) délimitant le canal (2).

4. Agencement de volet selon une des revendications 1 à 3, **caractérisé par** au moins une des caractéristiques suivantes :
- le volet (5) est disposé sur un arbre de positionnement (18), qui s'étend coaxialement à l'axe de basculement (6) ;
- le volet (5) est positionné de manière basculable sur l'arbre de positionnement (18) autour de l'axe de basculement (6) ;
- le volet (5) est disposé de manière solidaire en rotation sur l'arbre de positionnement (18) et l'arbre de positionnement (18) est positionné rotativement autour de l'axe de basculement (6) ;
- le volet (5) est prétendu au moyen d'un ressort de rappel (19) dans une position de départ ;
- le ressort de rappel (19) vient en prise avec le volet (5) ou avec l'arbre de positionnement (18) relié de manière solidaire en rotation au volet (5).

5. Agencement de volet selon une des revendications 1 à 4, **caractérisé par** au moins une des caractéristiques suivantes :
- le volet (5) présente deux tourillons (39), qui sont respectivement positionnés rotativement dans un palier de basculement (40) autour de l'axe de basculement (6) ;
- les deux paliers de basculement (40) sont réalisés dans respectivement une joue (36), qui sont insérées dans le canal (2) en tant que portions de paroi délimitant le canal (2) ;
- dans le canal (2) est insérée une unité de volet (36), qui forme une portion de paroi (27) délimitant le canal (2), dans laquelle le volet (5) et/ou l'organe de réglage (8) sont disposés, et à travers laquelle l'axe de basculement (6) et/ou l'axe de rotation (9) et/ou l'arbre de positionnement (18) et/ou l'arbre d'entraînement (10) s'étend ;
- le clapet (5) est au moins dans une position d'extrémité pressé par l'organe de réglage (8) contre une butée d'extrémité (22 ;37 ;38).

6. Installation de gaz d'affinage pour alimenter un moteur à combustion interne, notamment d'un véhicule automobile, en gaz d'affinage,
- comportant plusieurs canaux pour introduire le gaz d'affinage vers les cylindres individuels du moteur à combustion interne,
- dans lequel au moins un des canaux est équipé d'un agencement de volet (4) selon au moins une des revendications 1 à 5.

7. Installation de gaz d'affinage selon la revendication 6, dans laquelle au moins deux ou tous les canaux (2) sont respectivement équipés d'un tel agencement de volet (4),
**caractérisé par** au moins une des caractéristiques suivantes :
- au moins deux ou tous les dispositifs d'actionnement (7) présentent pour actionner leurs organes de réglage (8) un entraînement de réglage commun (46) ;
- sur au moins deux ou sur tous les dispositifs d'actionnement (7) les organes de réglage (8) sont disposés sur un arbre d'entraînement commun (10) de manière solidaire en rotation ;
- l'entraînement de réglage commun (46) est couplé en entraînement à l'arbre d'entraînement commun (10) ;
- sur au moins deux ou tous les dispositifs d'actionnement (7) les volets (5) sont disposés sur un arbre de positionnement commun (18) ;
- tous les volets (5) disposés de manière solidaire en rotation sur l'arbre de positionnement commun (18) sont prétendus dans une position de départ au moyen d'un ressort de rappel commun (19) venant en prise avec l'arbre de positionnement commun (18) ;
- mes volets (5) servent de volets Tumble ou de volets de torsion.
